# FASCICULE DE BREVET EUROPEEN

(11) **EP 2 480 795 B1**
(45) Date de publication et mention de la délivrance du brevet: **14.08.2013**
(21) Numéro de dépôt: 10763772.0
(22) Date de dépôt: 30.08.2010
(51) Int. Cl.: F16B 2/08, F16B 2/20, F16L 33/035

(54) **COLLIER DE SERRAGE.**
KLEMMSCHELLE
CLAMPING COLLAR

(30) Priorité: 24.09.2009 FR 0956601
(43) Date de publication de la demande: 01.08.2012
(73) Titulaire: Etablissements Caillau, 92130 Issy-les-Moulineaux (FR)
(72) Inventeur: FOUQUERAY, Cyriaque, F-41200 Romorantin (FR); SASSIER, Adrien, F-41150 Chouzy Sur Cisse (FR); LACHE, Christophe, F-41200 Romorantin (FR)
(74) Mandataire: Intès, Didier Gérard André
(86) Numéro de dépôt international: PCT/FR2010/051798
(87) Numéro de publication internationale: WO 2011/036364

(56) Documents cités:
- EP-A1- 0 344 050
- WO-A1-02/50468
- FR-A1- 2 705 411

## Description

La présente invention concerne un collier de serrage comprenant une ceinture métallique ayant, au voisinage d'une première extrémité, une oreille saillante et, au voisinage d'une deuxième extrémité, un crochet présentant une paroi avant destinée à être retenue contre une paroi arrière de l'oreille alors que le crochet est accroché sur l'oreille pour maintenir le collier à l'état serré.

On connaît déjà les colliers de serrage de ce type, par exemple par la demande de brevet EP 0 003 192. Dans cet art antérieur connu, l'oreille est formée par un double pli radial, chaque pan de ce double pli étant orienté transversalement à la longueur de la ceinture métallique, c'est-à-dire selon l'axe du collier.

Dans une version améliorée de ces colliers de l'art antérieur, par exemple comme par les demandes de brevet FR 2 705 411 et EP 0 724 106, le pan arrière du double pli présente un bossage de centrage, qui est en saillie sur la paroi arrière de l'oreille. Le crochet présente alors, une configuration adaptée, sa paroi avant ayant une forme lui permettant de se caler axialement par rapport à ce bossage. En particulier, dans l'art antérieur, la paroi avant du crochet présente une encoche dans laquelle vient s'insérer ce bossage. Ceci permet de centrer l'un par rapport à l'autre, l'oreille et le crochet, en les alignant selon l'axe longitudinal de la ceinture.

La demande de brevet EP 0344050 A révèle l'état de la technique le plus proche, et définit le préambule de la revendication 1.

Pour éviter toute confusion, on précise que l'on désignera ci-après par axe du collier l'axe passant par le centre de la ceinture et du collier, et dirigé selon la largeur de la ceinture. En revanche, on appellera axe longitudinal de la ceinture, l'axe qui, lorsque la ceinture est mise à plat avant son enroulement, s'étend selon la longueur de cette ceinture, perpendiculairement à sa largeur. Lorsque la ceinture est enroulée, l'axe longitudinal de la ceinture forme un cercle centré par rapport à la largeur de la ceinture.

Ces colliers de l'art antérieur donnent satisfaction, en particulier ceux qui permettent un centrage relatif du crochet et de l'oreille. Pour fermer et serrer le collier, le crochet passe par-dessus l'oreille et la paroi avant du crochet vient s'accrocher contre la paroi arrière de l'oreille. La paroi avant de l'oreille forme donc une sorte de rampe, sur laquelle vient glisser le bord de la paroi avant du crochet, pour que le crochet puisse passer par-dessus cette oreille. Toutefois, dans les colliers de l'art antérieur précités, même ceux qui sont améliorés pour permettre le centrage relatif du crochet et de l'oreille, cette rampe ne permet pas de guider efficacement le crochet en vue de son centrage. Ainsi, si le bord de la paroi avant du crochet arrive au sommet de l'oreille en étant nettement décentré par rapport au bossage de centrage, l'accrochage risque de ne pas s'effectuer correctement.

L'invention vise à améliorer encore l'art antérieur, en proposant un collier de serrage du type cité en préambule, ayant une oreille améliorée.

Ce but est atteint grâce au fait que la paroi arrière de l'oreille présente, en vue de dessus, une forme en V dont la pointe est tournée dans le sens allant en s'éloignant du crochet, et la paroi avant du crochet présente des côtés d'accrochage inclinés par rapport à la direction transversale de la ceinture en correspondance avec l'inclinaison des branches du V.

La pointe du V formée en vue de dessus par la paroi arrière de l'oreille peut-être « émoussée » sans former réellement une pointe anguleuse, mais plutôt un arrondi. Quoi qu'il en soit, cette oreille est très particulière en ce que, de part et d'autre de cette pointe, elle présente deux branches inclinées en V. Ainsi, même si lors de son passage au sommet de l'oreille, le bord de la paroi avant du crochet est décentré, ce bord coopérera préférentiellement avec une des branches du V qui, de par son inclinaison, aura naturellement tendance à réorienter le bord de la paroi avant du crochet de manière à le recentrer par rapport à l'oreille. De plus, la répartition des efforts de serrage est améliorée. En effet, une fois le collier serré, ces efforts s'exercent notamment sur les côtés d'accrochage de la paroi avant du crochet, qui coopère avec les branches du V qui est formé par la paroi arrière de l'oreille. Du fait de l'inclinaison de ces côtés d'accrochage et de ces branches, les efforts de serrage se trouvent ramenés essentiellement selon une composante centrée sur l'axe longitudinal de la ceinture. Ceci favorise la tenue du serrage et évite tout risque de décrochement intempestif par un déplacement transversal relatif du crochet et de l'oreille non maîtrisé.

Avantageusement, l'oreille est formée par un double pli et la partie avant du double pli, formant la paroi avant de l'oreille, présente également en vue de dessus une forme en V dont la pointe est tournée dans le sens allant en s'éloignant du crochet.

Le fait que la paroi avant du double pli formé par l'oreille ait également une forme en V permet d'améliorer encore le centrage relatif du crochet et de l'oreille. En effet, comme indiqué précédemment, cette paroi avant joue, lors de la fermeture du collier, le rôle d'une rampe avec laquelle coopère le bord de la paroi avant du crochet. Du fait de sa forme en V, la paroi avant de l'oreille forme un guide qui coopère avec le bord de la paroi avant du crochet, en particulier avec le bord des côtés d'accrochage inclinés de cette paroi avant, pour bien centrer le crochet par rapport à l'oreille lors de la montée de cette rampe. Le crochet arrive ainsi au sommet de l'oreille en étant parfaitement centré et l'accrochage s'effectue de manière parfaitement sécurisé.

Avantageusement, la paroi avant de l'oreille présente des nervures de rigidification. De préférence, ces nervures sont disposées symétriquement par rapport à la pointe du V formé par cette paroi avant, de manière à ne pas nuire au guidage précité.

Avantageusement, dans le creux du V, une portion centrale de la base de la partie avant du double pli formant l'oreille est repoussée dans le plan de la ceinture, sous ladite partie avant.

Dans les colliers de l'art antérieur dont la paroi arrière de l'oreille présente un bossage de centrage, le serrage peut être localement déficient sous ce bossage. Au contraire, avec cette caractéristique de l'invention, la matière métallique est repoussée sous la partie avant du double pli que forme l'oreille et vient donc assurer une continuité d'appui de la matière métallique sur l'objet serré à l'aide du collier, même dans la région de la saillie de centrage formée par la pointe du V que forme la paroi arrière de l'oreille.

Avantageusement, la paroi avant du crochet présente un décrochement central.

Ce décrochement central peut en particulier être réalisé par une encoche formée sur la paroi avant du crochet, dans laquelle vient se loger la pointe du V de la paroi arrière de l'oreille à l'état accroché et serré du collier.

Toutefois, avantageusement, la paroi avant du crochet présente une portion centrale, qui va en s'avançant vers l'avant depuis la tête du crochet vers le bord en avancée de ladite portion centrale et deux portions latérales en retrait par rapport à cette portion centrale. Ainsi, sans que ne soit prévue une encoche sur la paroi avant du crochet, c'est la portion centrale en avancée qui coopère avec la pointe du V de la paroi arrière de l'oreille, en venant coiffer cette dernière à l'aide à l'état accroché et serré du collier. Il en résulte que les efforts de serrage s'exercent sur toute la largeur de la paroi avant du crochet, et sont donc encore mieux répartis que lorsque cette paroi avant est pourvue d'une encoche.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre, en vue de côté, un collier selon l'invention, selon une première variante ;
- la figure 2A est une vue de dessus, prise selon la flèche IIA de la figure 1 montrant l'oreille ;
- la figure 2B est une vue en vue de dessus, prise selon la flèche IIB de la figure 1 montrant le crochet ;
- la figure 3 est une vue en perspective prise de côté, montrant un collier selon une autre variante ;
- la figure 4A est une vue de dessus du collier de la figure 3, prise selon la flèche IV de la figure 3 ;
- la figure 4B est une vue partielle en coupe selon la ligne IVB de la figure 4A ;
- la figure 5 est une vue en perspective du collier prise selon la flèche V de la figure 4A ;
- la figure 6 est une vue en perspective du collier prise selon la flèche VI de la figure 5 et montrant donc les faces intérieures du crochet et de l'oreille ; et
- la figure 7 est une vue de dessous de l'oreille.

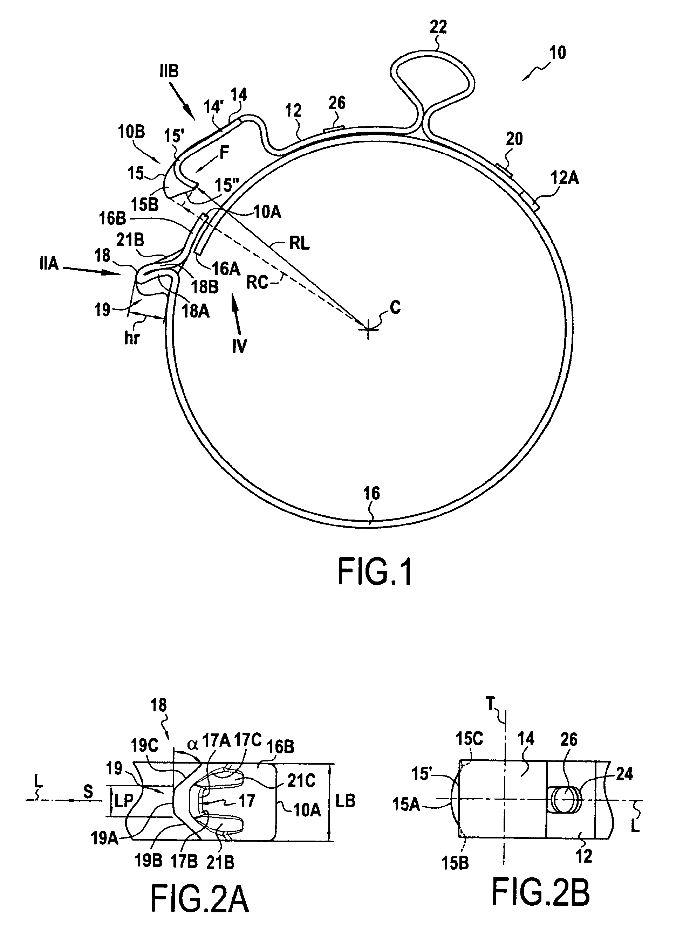

Le collier représenté sur la figure 1 comprend une ceinture métallique 10 formée de deux portions de bande, respectivement une première portion de bande 12 qui porte un crochet 14, et une deuxième portion de bande 16 qui porte une oreille 18. L'oreille 18 est formée au voisinage de l'extrémité libre de la deuxième portion de bande 16 qui forme une première extrémité 10A de la ceinture. Le crochet 14 est formé à une extrémité de la première portion de bande 12 qui forme une deuxième extrémité 10B de la ceinture. L'extrémité 16A de la deuxième portion de bande 16 qui est opposée à l'extrémité 10A revient sous le crochet 14, cette portion de bande 16 étant enroulée sur plus de 360°, pour former une bavette assurant une continuité d'appui sous le crochet 14.

L'extrémité 12A de la première portion de bande 12 opposée au crochet 14 est fixée à la deuxième portion de bande 16 par tout moyen approprié, par exemple par un rivet 20. Entre cette extrémité 12A et le crochet 14, la première portion de bande 12 comprend une réserve d'élasticité 22 et une fenêtre 24 (voir figure 2B) à travers laquelle fait saillie un ergot 26 formé dans la première portion de bande 16.

On comprend que, pour fermer et serrer le collier, la paroi avant 15 du crochet 14 passe par-dessus l'oreille 18, et cette paroi avant vient s'accrocher sur la paroi arrière 19 de l'oreille 18, en étant retenue contre cette paroi arrière.

Au sens de la présente description, une partie du crochet présentée comme étant vers l'avant par rapport à une autre partie, est une partie qui est plus proche de l'oreille que cette autre partie, laquelle est donc vers l'arrière. De même, une partie de l'oreille qui est située vers l'avant par rapport à une autre partie, est plus proche du crochet que cette autre partie.

On voit sur la figure 2A que la paroi arrière 19 présente en vue de dessus, une forme en V, dont la pointe 19A est tournée dans le sens S allant en s'éloignant du crochet 14. Ce sens S est également celui dans lequel le crochet est déplacé par rapport à l'oreille pour venir accrocher sa paroi avant 15 derrière l'oreille 18. La pointe 19A du V que forme la paroi arrière du crochet est émoussée, c'est-à-dire légèrement arrondie ou présentant un méplat, comme représenté, de sorte que cette pointe s'étend sur une largeur LP qui représente environ 1/4 à 1/3 de la largeur totale LB de la portion de bande dans laquelle est formée l'oreille 18. De part et d'autre de cette pointe, la paroi arrière en V de l'oreille 18 présente deux branches latérales, respectivement 19B et 19C, qui sont inclinées de manière symétrique par rapport à l'axe longitudinal L de la portion de bande considérée.

Comme on le voit sur la figure 2B, la paroi avant 15 du crochet présente quant à elle des côtés d'accrochage, respectivement 15B et 15C, qui sont inclinés par rapport à la direction transversale T de la ceinture (cette direction correspondant à celle de l'axe du collier), en correspondance avec l'inclinaison des branches 19B, 19C du V que forme la partie arrière de l'oreille, par rapport à la même direction transversale T. En l'espèce, la paroi avant 15 présente une portion centrale en avancée 15A, et des portions latérales 15B et 15C en retrait par rapport à cette portion centrale. En considérant les figures 1 et 2B, on comprend que cette portion centrale 15A de la paroi avant 15 va en s'avançant vers l'avant depuis la tête 15' du crochet vers le bord 15" de ce crochet. Dans la portion centrale 15A, ce bord 15" est en avancée. La tête 15' du crochet 14 correspond à la limite avant de sa paroi supérieure 14', sur laquelle est réalisé le pliage qui conforme la paroi avant du crochet de manière à ce que cette paroi s'oriente sensiblement radialement pour être capable de s'accrocher derrière l'oreille 18. On comprend que, en l'état accroché, la portion centrale en avancée 15A vient coiffer la pointe 19A du V formé par la paroi arrière 19 de l'oreille 18.

Comme on le voit bien sur la figure 1, l'oreille 18 est formée par un double pli, ayant deux pans de plis, respectivement un pli arrière 18A et un pli avant 188. La paroi avant 17 de l'oreille est formée sur la partie avant du double pli. On voit sur la figure 2A que, en vue de dessus, cette paroi 17 présente également une forme en V dont la pointe 17A est tournée dans le sens S. De part et d'autre de cette pointe, cette paroi avant présente deux branches inclinées, respectivement 17B et 17C. On voit que les V 19A, 19B et 19C de la paroi arrière et 17A, 17B et 17C de la paroi avant sont parallèles. Lors du serrage du collier, le bord 15' de la paroi avant 15 du crochet 14 vient coopérer avec la paroi avant 17 de l'oreille. Ce faisant, la portion centrale 15A en avancée coopère avec le creux 17A du V de la paroi avant de l'oreille, et les côtés d'accrochage 15B et 15C coopèrent avec les branches 17B et 17C. Ceci permet de guider le crochet lors du serrage pour qu'il soit centré par rapport à l'oreille même avant de passer par-dessus l'oreille.

Les V 19A, 19B, 19C, et 17A, 17B, 17C ont des pointes émoussées, respectivement 19A et 17A. En l'espèce, ces pointes forment des méplats d'orientation transversale T. On pourrait donc également définir les formes de ces V comme des formes en U, dont les branches, respectivement 19B, 19 C et 17B, 17C, divergent à partir de la base 19A, 17A, en étant symétrique par rapport à une ligne médiane qui, en l'espèce, coïncide avec l'axe L.

Sur la figure 2A, on voit que, du côté avant de l'oreille 18, les branches du V sont reliées à un tronçon de bande avant 16B correspondant à la première extrémité 10A de la ceinture et située sensiblement dans le plan de cette ceinture. Sur cette liaison, sont situées des nervures inclinées, respectivement 21B et 21C. On voit que ces nervures sont disposées symétriquement par rapport à l'axe longitudinal L du tronçon de bande dans lequel est formé l'oreille. Ces nervures servent de rampe pour favoriser la montée du bord 15' de la paroi avant 15 du crochet 14 sur l'oreille 18. Elles sont sensiblement situées à mi-distance des branches des V, respectivement 17B et 19B, et 17C et 19C.

On voit encore sur la figure 2A que les branches du V, qu'il s'agisse du V de la paroi arrière 19 de l'oreille ou de celui de sa paroi avant 17, sont inclinées d'un angle a par rapport à la direction transversale T de la ceinture, cet angle étant de l'ordre de 10° à 45°, de préférence de 15° à 30°. Par ailleurs, comme on l'a indiqué précédemment, la pointe 19A 17A du V est aplatie ou arrondie.

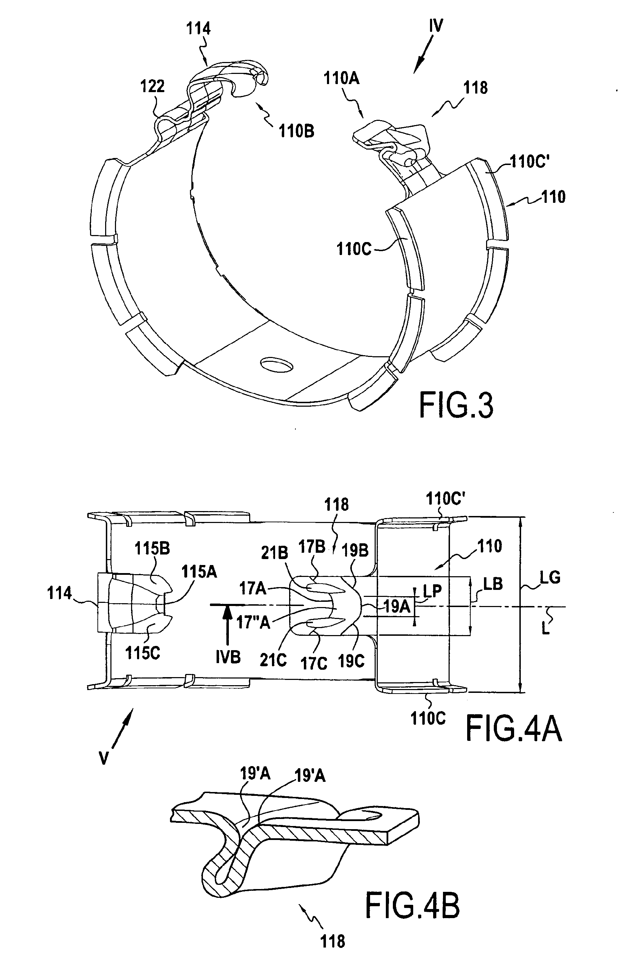

On décrit maintenant la figure 3 qui montre également un collier conforme à l'invention selon une variante de réalisation. Ce collier comprend une ceinture métallique 110 formée à partir d'une seule bande de métal. L'oreille 118 est formée à une première extrémité 110A de la ceinture tandis que le crochet 114 est formé à une deuxième extrémité 110B de cette ceinture. On voit que, à l'arrière du crochet, la ceinture présente une ondulation 122 formant une réserve d'élasticité. L'oreille est identique à l'oreille 18 qui vient d'être décrite en référence aux figures 1, 2A et 2B. Comme on le voit, sur la figure 4A, le crochet 114 est en revanche légèrement différent du crochet 14 des figures précédentes. En effet, sa paroi avant présente un décrochement central 115A, de part et d'autre duquel subsistent deux portions latérales, respectivement 115B et 115C. Ces portions latérales sont inclinées de manière à s'adapter à la conformation des branches des V que forme l'oreille, respectivement 19B 19C, et 17B et 17C. Les nervures 21B et 21C sont également bien visibles sur la figure 4A. Lors de l'accrochage du crochet 114 sur l'oreille 118, les bords des portions latérales 115B et 115C viennent glisser contre les branches 17B et 17C du V de la paroi avant 17 de l'oreille, et plus précisément coopèrent avec les nervures 21B et 21C pour guider le crochet de manière à le centrer par rapport à l'oreille, sur l'axe longitudinal L de la bande dans laquelle est formée la ceinture. Après accrochage, les portions latérales 115B et 115C viennent respectivement coiffer les branches 19B et 19C du V formé sur la paroi arrière de l'oreille 118. Dans le même temps, la pointe 19A du V de la paroi arrière de l'oreille 118 vient se loger dans le décrochement 115A de la paroi avant de l'oreille.

On comprend en particulier sur la figure 4A que le collier qui est représenté est un collier de grande largeur LG. Toutefois, dans la région des organes d'accrochage que forment le crochet et l'oreille, cette largeur est réduite à une largeur LB. Comme sur la figure 2A, la pointe 19A du V de la paroi arrière de l'oreille 118 s'étend sur une largeur LT qui est de l'ordre de 1/4 et 1/3 de la largeur LB de la portion de bande qui le porte. Cette largeur LB est localement réduite par rapport à la largeur LG de la ceinture et couvre environ 1/3 de cette largeur en étant centrée sur l'axe longitudinal L de la bande dans laquelle est formée la ceinture.

On voit également sur les figures 3 et 4A que les marges de la ceinture présentent des bords relevés 110C et 110C'. Ces bords relevés sont fendus radialement à espacements réguliers pour éviter de s'opposer au serrage du collier. Ils permettent de conférer à ce collier large une fonction de protection contre les chocs. Par ailleurs, ces bords relevés évitent que les bords longitudinaux ne forment des arêtes vives et limitent ainsi l'agressivité de ces bords sur l'objet serré par le collier, en particulier lorsque cet objet est en caoutchouc ou analogue ou, de manière générale, en tout autre matériau autre que du métal.

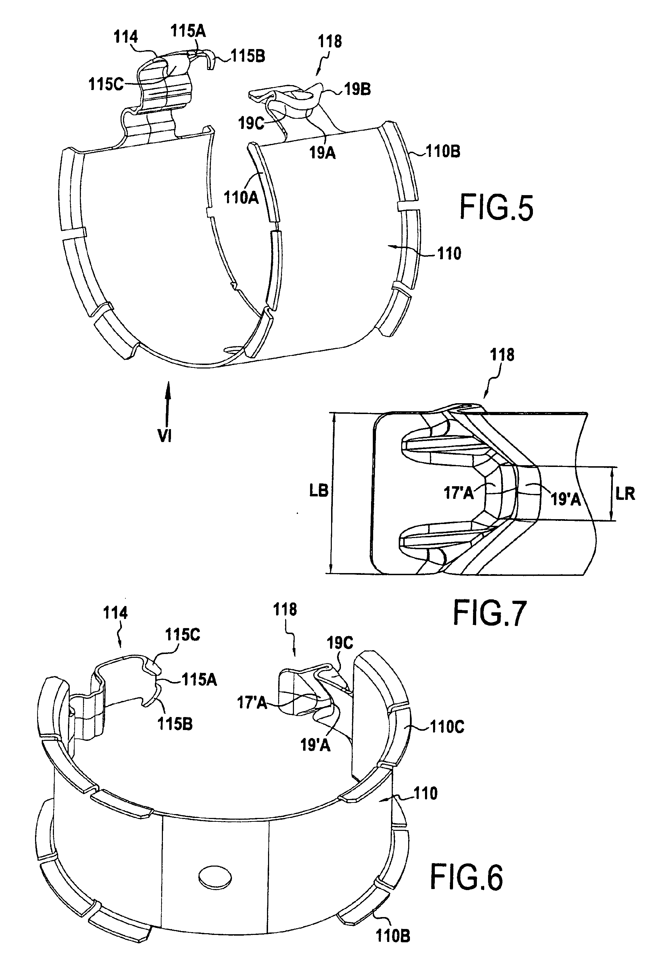

On décrit maintenant les figures 4B, 6 et 7 qui permettent de voir la face intérieure de l'oreille. On voit notamment, sous l'oreille 118, le creux 19'A qui, sur la face extérieure de l'oreille correspond à la pointe 19A du V. On voit sur les figures 4B et 6 qu'une portion centrale 17'A de la base de la partie avant du double pli formant l'oreille 18 est repoussée, dans le plan de la ceinture, sous ladite partie avant, dans le creux 19'A. Ceci est également visible sur la figure 4A, où l'on voit que la base du creux 17A du V de la paroi avant de l'oreille est repoussée en 17"A de manière à, entre les nervures 21B et 21C, s'étendre sous le sommet de l'oreille 18.

On voit sur la figure 7 que la largeur LR de la portion centrale repoussée 17'A est comprise entre 1/4 et 1/3 de la largeur de l'oreille qui correspond en l'espèce à la largeur LB de la portion de bande dans laquelle l'oreille est formée.

## Revendications

1. Collier de serrage comprenant une ceinture métallique (10 ; 110) ayant, au voisinage d'une première extrémité (10A ; 110A), une oreille saillante (18 ; 118) et, au voisinage d'une deuxième extrémité (10B ; 110B), un crochet (14 ; 114) présentant une paroi avant (15) destinée à être retenue contre une paroi arrière (19) de l'oreille (18 ; 118) alors que le crochet (14 ; 114) est accroché sur l'oreille (18 ; 118) pour maintenir le collier à l'état serré,
**caractérisé en ce que** la paroi arrière (19) de l'oreille (18 ; 118) présente, en vue de dessus, une forme en V dont la pointe (19A) est tournée dans le sens (S) allant en s'éloignant du crochet (14 ; 114) et **en ce que** la paroi avant (15) du crochet (14 ; 114) présente des côtés d'accrochage (15B ; 15C ; 115B ; 115C) inclinés par rapport à la direction transversale (T) de la ceinture en correspondance avec l'inclinaison des branches (19B ; 19C) du V.

2. Collier selon la revendication 1, **caractérisé en ce que** l'oreille (18 ; 118) est formée par un double pli (18A ; 18B) et **en ce que** la partie avant du double pli, formant la paroi avant (17) de l'oreille (18), présente également en vue de dessus une forme en V dont la pointe est tournée dans le sens (S) allant en s'éloignant du crochet.

3. Collier selon la revendication 1 ou 2, **caractérisé en ce que** les branches (19B ; 19C ; 17B ; 17C) du V sont inclinées d'un angle (α) de 10° à 45°, de préférence de 15° à 30°, par rapport à la direction transversale (T) de la ceinture.

4. Collier selon l'une quelconque des revendications 1 à 3, **caractérisé en ce que** la pointe (19A ; 17A) du V est aplatie ou arrondie.

5. Collier selon la revendication 2 et l'une quelconque des revendications 2 à 4, **caractérisé en ce que** dans le creux (19'A) du V, une portion centrale (17'A) de la base de la partie avant du double pli (18A ; 18B) formant l'oreille (18 ; 118) est repoussée dans le plan de la ceinture (10 ; 110), sous ladite partie avant.

6. Collier selon la revendication 5, **caractérisé en ce que** largeur (LR) de ladite portion centrale (17'A) repoussée est comprise entre 1/4 et 1/3 de la largeur (LB) de l'oreille (18 ; 118).

7. Collier selon la revendication 2 et l'une quelconque des revendications 1 à 6, **caractérisé en ce que**, du côté avant de l'oreille (18 ; 118), les branches du V sont reliées à un tronçon de bande avant (16B), situé sensiblement dans le plan de la ceinture, par des nervures inclinées (21B ; 21C).

8. Collier selon l'une quelconque des revendications 1 à 7, **caractérisé en ce que** la paroi avant du crochet (114) présente un décrochement central (115A).

9. Collier selon l'une quelconque des revendication 1 à 8, **caractérisé en ce que** la paroi avant (15) du crochet (14) présente une portion centrale (15A), qui va en s'avançant vers l'avant de la tête (15') du crochet vers le bord (15") en avancée de ladite portion centrale et deux portions latérales (15B ; 15C) en retrait par rapport à ladite portion centrale (15A).

## Patentansprüche

1. Klemmschelle, umfassend einen Metallring (10; 110), der in der Nähe eines ersten Endes (10A; 110A) eine vorspringende Öse (18; 118) und in der Nähe eines zweiten Endes (10B; 110B) einen Haken (14; 114) hat, der eine vordere Wand (15) aufweist, die dazu bestimmt ist, an einer hinteren Wand (19) der Öse (18; 118) gehalten zu werden, während der Haken (14; 114) an der Öse (18; 118) eingehakt ist, um die Schelle im festgezogenen Zustand zu halten,
**dadurch gekennzeichnet, daß** die hintere Wand (19) der Öse (18; 118) in Draufsicht eine V-Form aufweist, deren Spitze (19A) in die sich von dem Haken (14; 114) entfernende Richtung (S) gewandt ist, und daß die vordere Wand (15) des Hakens (14; 114) Einhakseiten (15B; 15C; 115B; 115C) aufweist, die gegenüber der Querrichtung (T) des Rings in Übereinstimmung mit der Neigung der Schenkel (19B; 19C) des V geneigt sind.

2. Schelle nach Anspruch 1, **dadurch gekennzeichnet, daß** die Öse (18; 118) durch einen Doppelfalz (18A; 18B) gebildet ist und daß der vordere Teil des Doppelfalzes, der die vordere Wand (17) der Öse (18) bildet, ebenfalls in Draufsicht eine V-Form aufweist, deren Spitze in die sich von dem Haken entfernende Richtung (S) gewandt ist.

3. Schelle nach Anspruch 1 oder 2, **dadurch gekennzeichnet, daß** die Schenkel (19B; 19C; 17B; 17C) des V um einen Winkel (α) von 10° bis 45°, vorzugsweise von 15° bis 30°, gegenüber der Querrichtung (T) des Rings geneigt sind.

4. Schelle nach einem der Ansprüche 1 bis 3, **dadurch gekennzeichnet, daß** die Spitze (19A; 17A) des V abgeflacht oder abgerundet ist.

5. Schelle nach Anspruch 2 und einem der Ansprüche 2 bis 4, **dadurch gekennzeichnet, daß** in der Mulde (19'A) des V ein mittlerer Abschnitt (17'A) der Basis des vorderen Teils des Doppelfalzes (18A; 18B), der die Öse (18; 118) bildet, in der Ebene des Rings (10; 110), unter den vorderen Teil getrieben ist.

6. Schelle nach Anspruch 5, **dadurch gekennzeichnet, daß** die Breite (LR) des getriebenen mittleren Abschnitts (17'A) zwischen 1/4 und 1/3 der Breite (LB) der Öse (18; 118) beträgt.

7. Schelle nach Anspruch 2 und einem der Ansprüche 1 bis 6, **dadurch gekennzeichnet, daß** auf der Vorderseite der Öse (18; 118) die Schenkel des V durch geneigte Rippen (21 B; 21 C) mit einem im wesentlichen in der Ebene des Rings gelegenen vorderen Bandabschnitt (16B) verbunden sind.

8. Schelle nach einem der Ansprüche 1 bis 7, **dadurch gekennzeichnet, daß** die vordere Wand des Hakens (114) eine mittlere Ausbuchtung (115A) aufweist.

9. Schelle nach einem der Ansprüche 1 bis 8, **dadurch gekennzeichnet, daß** die vordere Wand (15) des Hakens (14) einen mittleren Abschnitt (15A), der von dem Kopf (15') des Hakens nach vorne in Richtung des vorspringenden Randes (15") des mittleren Abschnitts vorspringt, sowie zwei Seitenabschnitte (15B; 15C), die gegenüber dem mittleren Abschnitt (15A) zurückspringen, aufweist.

## Claims

1. A clamping collar comprising a metal belt (10; 110) having a projecting lug (18; 118) in the vicinity of a first end (10A; 110A), and a hook (14; 114) in the vicinity of a second end (10B; 110B), which hook has a front wall (15) designed to be retained against a rear wall (19) of the lug (18; 118) while the hook (14; 114) is hooked onto the lug (18; 118) in order to maintain the collar in the tightened state;
said clamping collar being **characterized in that**, seen from above, the rear wall (19) of the lug (18; 118) has a V-shape having its tip (19A) pointing (S) away from the hook (14; 114), and **in that** the front wall (15) of the hook (14; 114) has hooking sides (15B; 15C; 115B; 115C) that are inclined relative to the transverse direction (T) of the belt to match the inclination of the branches (19B; 19C) of the V-shape.

2. A collar according to claim 1, **characterized in that** the lug (18; 118) is formed by a double fold (18A; 18B), and **in that**, seen from above, the front portion of the double fold, which portion forms the front wall (17) of the lug (18), also has a V-shape having its tip pointing (S) away from the hook.

3. A collar according to claim 1 or claim 2, **characterized in that** the branches (19B; 19C; 17B; 17C) of the V-shape are inclined at an angle (α) lying in the range 10° to 45°, and preferably in the range 15° to 30°, relative to the transverse direction (T) of the belt.

4. A collar according to any one of claims 1 to 3, **characterized in that** the tip (19A; 17A) of the V-shape is flattened or rounded.

5. A collar according to claim 2 and to any one of claims 2 to 4, **characterized in that**, in the recess (19'A) of the V-shape, a central fraction (17'A) of the base of the front portion of the double fold (18A; 18B) that forms the lug (18; 118) is pushed away in the plane of the belt (10; 110), under said front portion.

6. A collar according to claim 5, **characterized in that** the width (LR) of said pushed-away central fraction (17'A) lies in the range ¼ of the width (LB) of the lug (18; 118) to ⅓ of said width of the lug.

7. A collar according to claim 2 and to any one of claims 1 to 6, **characterized in that**, on the front side of the lug (18; 118) the branches of the V-shape are connected to a front strip segment (16B) that is situated substantially in the plane of the belt, via inclined ribs (21B, 21C).

8. A collar according to any one of claims 1 to 7, **characterized in that** the front wall of the hook (114) is provided with a central setback (115A).

9. A collar according to any one of claims 1 to 8, **characterized in that** the front wall (15) of the hook (14) has a central fraction (15A) that is set forward going from the head (15') of the hook towards the set-forward edge (15") of said central fraction, and two side fractions (15B; 15C) that are set back relative to said central fraction (15A).
